# EUROPEAN PATENT SPECIFICATION

(11) **EP 1 421 743 B1**
(45) Date of publication and mention of the grant of the patent: **02.06.2010**
(21) Application number: 02761481.7
(22) Date of filing: 23.08.2002
(51) Int. Cl.: H04B 7/216

(54) **IMPLEMENTING A PHYSICAL LAYER AUTOMATIC REPEAT REQUEST FOR A SUBSCRIBER UNIT**
AUSFÜHRUNG EINER AUTOMATISCHEN WIEDERHOLUNGSAUFFORDERUNG IN DER PHYSIKALISCHEN LAGE FÜR EINE TEILNEHMEREINHEIT
UNITE D'ABONNE METTANT EN OEUVRE UNE DEMANDE AUTOMATIQUE DE REPETITION PAR COUCHE PHYSIQUE

(30) Priority: 24.08.2001 US 939410; 27.02.2002 US 85203
(43) Date of publication of application: 26.05.2004
(73) Proprietor: INTERDIGITAL TECHNOLOGY CORPORATION, Wilmington, DE 19801 (US)
(72) Inventor: KWAK, Joseph, A., Bolingbrook, IL 60440 (US)
(74) Representative: Bohnenberger, Johannes
(86) International application number: PCT/US2002/026941
(87) International publication number: WO 2003/019844

(56) References cited:
- EP-A2- 0 797 327
- EP-A2- 0 859 475
- WO-A-99/12303
- US-A- 5 657 325
- US-A- 5 946 320
- US-B1- 6 208 663
- US-B1- 6 317 418
- ERIKSSON S ET AL: "Comparison of link quality control strategies for packet data services in EDGE" VEHICULAR TECHNOLOGY CONFERENCE, 1999 IEEE 49TH HOUSTON, TX, USA 16-20 MAY 1999, PISCATAWAY, NJ, USA,IEEE, US, 16 May 1999 (1999-05-16), pages 938-942, XP010342128 ISBN: 0-7803-5565-2
- SAYEED Z: "Throughput analysis and design of fixed and adaptive ARQ/diversity systems for slow fading channels" GLOBAL TELECOMMUNICATIONS CONFERENCE, 1998. GLOBECOM 1998. THE BRIDGE TO GLOBAL INTEGRATION. IEEE SYDNEY,NSW,AUSTRALIA 8-12 NOV. 1998, PISCATAWAY, NJ, USA,IEEE, US, vol. 6, 8 November 1998 (1998-11-08), pages 3686-3691, XP010339471 ISBN: 0-7803-4984-9
- SHIOZAKI A ET AL: "A HYBRID ARQ SCHEME WITH ADAPTIVE FORWARD ERROR CORRECTION FOR SATELLITE COMMUNICATIONS" IEEE TRANSACTIONS ON COMMUNICATIONS, IEEE SERVICE CENTER, PISCATAWAY, NJ, US, vol. 39, no. 4, 1 April 1991 (1991-04-01), pages 482-484, XP000241258 ISSN: 0090-6778
- BAKHTIYARI S ET AL: "PRACTICAL IMPLEMENTATION OF A MOBILE DATA LINK PROTOCOL WITH A TYPE II HYBRID ARQ SCHEME AND CODE COMBINING" PERSONAL COMMUNICATION - FREEDOM THROUGH WIRELESS TECHNOLOGY. SECAUCUS, NJ., MAY 18 - 20, 1993, PROCEEDINGS OF THE VEHICULAR TECHNOLOGY CONFERENCE, NEW YORK, IEEE, US, vol. CONF. 43, 18 May 1993 (1993-05-18), pages 774-777, XP000393297 ISBN: 0-7803-1267-8

## Description

### BACKGROUND

The present invention relates to wireless communication systems. More particularly, it relates to a modification to such systems by employing a physical layer (PHY) automatic repeat request (ARQ) scheme.

Proposed broadband fixed wireless access (BFWA) communication systems, using either single carrier-frequency domain equalization (SC-FDE) or orthogonal frequency division multiplex (OFDM) plan on using a high speed downlink packet access (HSDPA) application. This application will transmit downlink packet data at high speeds. In BFWA, a building or group of buildings are connected, either wirelessly or wired, and operate as a single subscriber site. The data demand for such a system is quite high for the single site's multiple end users requiring large bandwidths.

The current proposed system employs a layer 2 automatic repeat request (ARQ) system. Data blocks unsuccessfully transmitted to the subscribers are buffered and retransmitted from layer 2. The data blocks stored in layer 2 are typically large, are transmitted for high signal to noise ratio (SNR) reception, are received with a low block error rate (BLER), and are infrequently retransmitted. Additionally, layer 2 ARQ signaling is typically slow requiring large buffers and long retransmission intervals.

Accordingly, it is desirable to have alternatives in addition to a layer 2 ARQ system. WO99/12303A relates to error handling using ARQ in digital communication systems that support multiple forward error correction (FEC) coding and/or modulation schemes.

### SUMMARY

A subscriber unit comprises a transmitter and a receiver. A physical layer transmitter, at the transmitter, receives data and formats the received data into uplink packets having a particular encoding/data modulation. The physical layer transmitter contains n channels which transmit the uplink packets and retransmits uplink packets in response to not receiving a corresponding acknowledgment for a given packet. An adaptive modulation and coding controller in the transmitter collects retransmission statistics and adjusts the particular encoding/data modulations using the collected statistics and the packets are transmitted using OFDMA and selective nulling of subchannels in an OFOMA set is performed in addition to the FEC and modulation adjusting. The receiver has a physical layer n-channel receiver for receiving downlink packets. The receiver contains an n-channel hybrid ARQ combiner/decoder which combines packet transmissions, decodes packets and detects packet errors. The receiver contains an acknowledgment transmitter which transmits an acknowledgment for each packet, if that packet has an acceptable error rate. The receiver contains an in-sequence delivery element which delivers acceptable packets to higher layers.

### BRIEF DESCRIPTION OF THE DRAWINGS

Figures 1a and 1b are simplified block diagrams of downlink and uplink physical ARQs.

Figure 2 is a flow chart for using retransmission statistics for adaptive modulation and coding.

Figure 3 is block diagram showing a multi-channel stop and wait architecture.

### DETAILED DESCRIPTION OF THE PREFERRED EMBODIMENTS

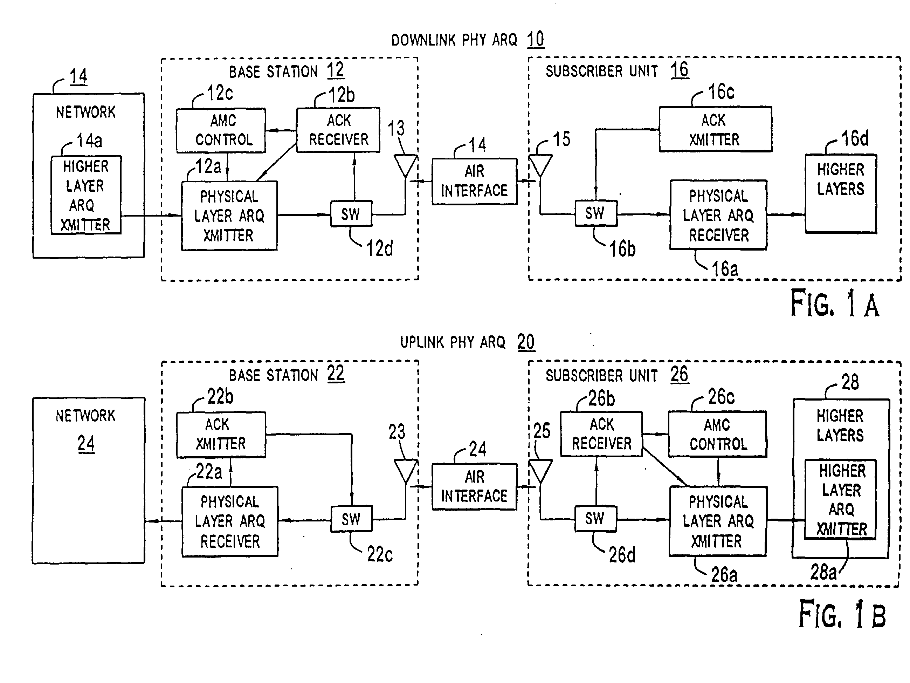

Figures 1a and 1b respectively show a downlink physical ARQ 10 and uplink physical ARQ 20.

The downlink physical ARQ 10 comprises a base station 12 receiving packets from the higher layer ARQ transmitter 14a provided in network 14. The packets from transmitter 14a are applied to the physical layer ARQ transmitter 12a in base station 12. The ARQ transmitter 12a encodes the data with a forward error correcting code (FEC), appends error check sequences (ECSs), modulates the data as directed by the adaptive modulation and coding (AMC) controller 12c, such as by using binary phase shift keying (BPSK), quadrature phase shift keying (QPSK) or m-ary quadrature amplitude modulation (i.e. 16-QAM or 64-QAM). Additionally, for orthogonal frequency division multiple access (OFDMA), the AMC controller 12a may vary the subchannels used to carry the packet data. The physical layer ARQ transmitter 12a transmits packets to the subscriber unit 16 through air interface 14 by way of switch, circulator or duplexor 12d and antenna 13. The transmitter 12a also temporarily stores the message for retransmission, if necessary, in a buffer memory incorporated in the transmitter 12a.

Antenna 15 of subscriber unit 16 receives the packet. The packet is input into physical layer ARQ receiver 16a through switch, circulator or duplexor 16b. At the receiver 16a, the packet is FEC decoded and checked for errors using the ECS. The receiver 16a then controls acknowledgment transmitter 16c to either acknowledge (ACK) receipt of a packet with an acceptable error rate or to request retransmission by, preferably, withholding an acknowledgment signal or transmitting a negative acknowledgment (NAK).

The ACK is sent by ACK transmitter 16c to the base station 12 through switch 16b and antenna 15. The ACK is sent via the air interface 14 to antenna 13 of base station 12. The received ACK is processed by an acknowledgment receiver 12b in the base station. The ACK receiver 12b delivers the ACK/NAKs to the adaptive modulation and coding (AMC) controller 12c and to the transmitter 12a. The AMC controller 12c analyzes the channel quality to the subscriber unit 16 using statistics of the received ACKs and may vary the FEC encoding and modulation techniques of subsequent transmissions of the message, as will be described in more detail. If the subscriber unit 16 acknowledges receipt of the packet, receipt of this ACK at base station 12 causes the original packet, which was temporarily stored in a buffer memory, to be cleared in readiness for the next packet.

If no ACK is received or a NAK is received, the physical layer transmitter 12a retransmits the original message or selectively modified version of the original message to subscriber 16. At the subscriber unit 16, the retransmission is combined with the original transmission, if available. This technique facilitates receipt of a correct message by use of data redundancy or selective repeat combining. The packets having an acceptable error rate are transferred to higher layers 16d for further processing. The acceptable received packets are delivered to the higher layers 16d in the same data order in which the data was provided to transmitter 12a in the base station (i.e. in-sequence delivery). The maximum number of retransmissions is limited to an operator-defined integer value, such as in the range of 1 to 8. After the maximum number of retransmissions are attempted, the buffer memory is cleared for use by the next packet. Decoding an acknowledgment using small packets at the physical layer reduces transmission delays and message handling time.

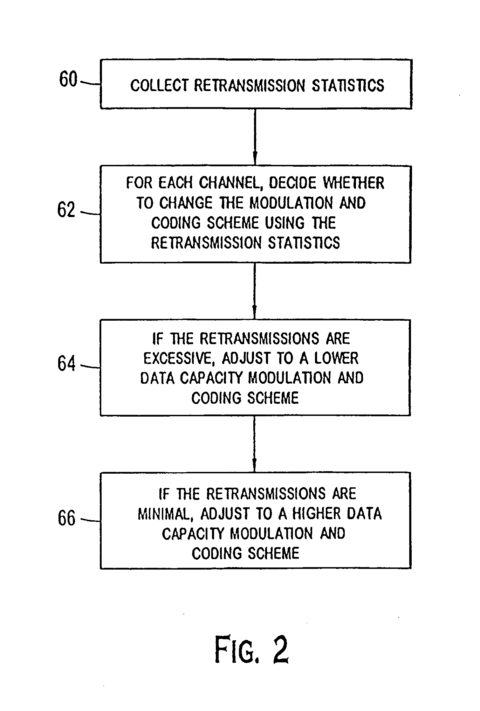

Since PHY ARQ occurs at the physical layer, the number of retransmission occurrences for a particular channel, retransmission statistics, is a good measure of that channel's quality. Using the retransmission statistics, the AMC controller 12c may vary the modulation and coding schemes for that channel, as shown in Figure 2. Additionally, the retransmission statistics can also be combined with other link quality measurements, such as bit error rates (BERs) and block error rates (BLERs), by the AMC controller 12c to gauge the channel quality and determine whether a change in the modulation and coding scheme is required.

To illustrate for SC-FDE, the retransmission occurrences for a particular channel are measured to produce retransmission statistics, (60). A decision on whether to change the modulation scheme is made using the retransmission statistics, (62). If the retransmissions are excessive, a more robust coding and modulation scheme is used, (64), usually at a reduced data transfer rate. The AMC controller 12c may increase the spreading factor and use more codes to transfer the packet data. Alternately or additionally, the AMC controller may switch from a high data throughput modulation scheme to a lower one, such as from 64-QAM to 16-QAM or QPSK. If the rate of retransmissions is low, a switch to a higher capacity modulation scheme is made, such as from QPSK to 16-ary QAM or 64-ary QAM, (66). The decision preferably uses both the retransmission rate and other link quality measurements signaled from the receiver, such as BER or BLER, (62). The decision limits are preferably set by the system operator.

For OFDMA, the retransmission occurrences are used to monitor the channel quality of each subchannel. If the retransmission rate or retransmission rate/link quality for a particular subchannel indicates poor quality, that subchannel is selectively nulled from the OFDM frequency set, (64), in order to preclude use of such poor quality subchannels for some future period. If the retransmission rate or retransmission rate/link quality indicates high quality, a previously nulled subchannels may be added back to the OFDM frequency set, (66).

Using the retransmission occurrences as a basis for AMC provides a flexibility to match the modulation and coding scheme to the average channel conditions for each user. Additionally, the retransmission rate is insensitive to measurement error and reporting delay from the subscriber unit 16.

The uplink ARQ20 is similar in nature to the downlink ARQ 10 and is comprised of a subscriber unit 26 in which packets from a higher layer ARQ transmitter 28a of the higher layers 28 are transferred to physical layer ARQ transmitter 26a. The message is transmitted to the base station antenna through switch 26d, subscriber antenna 25 and air interface 24. The AMC controller, likewise, may vary the modulation and coding scheme using the retransmission statistics of a channel.

Physical layer ARQ receiver 22a, similar to receiver 16a of Figure 1a, determines if the message has an acceptable error rate requiring retransmission. The acknowledgment transmitter reports status to subscriber unit 26, causing the transmitter 26a to retransmit or alternatively to clear the original message temporarily stored at transmitter 26a in readiness to receive the next message from the higher layers 28. Successfully received packets are sent to the network 24 for further processing.

Although not shown for purposes of simplicity, the system is preferably used for a HSDPA application in a BFWA system, although other implementations may be used. The BFWA system may use frequency division duplex or time division duplex SC-FDE or OFDMA. In such a system, the base station and all of the subscribers are in fixed locations. The system may comprise a base station and a large number of subscriber units. Each subscriber unit may serve multiple users within one building or several neighboring buildings, for example. These applications typically require a large bandwidth due to the large number of end users at one subscriber unit site.

A PHY ARQ deployed in such a system is transparent to the higher layers, such as the medium access controllers (MACs). As a result, PHYARQ can be used in conjunction with higher layer ARQs, such as layer 2. In such cases, the PHY ARQ reduces the retransmission overhead of the higher layer ARQs.

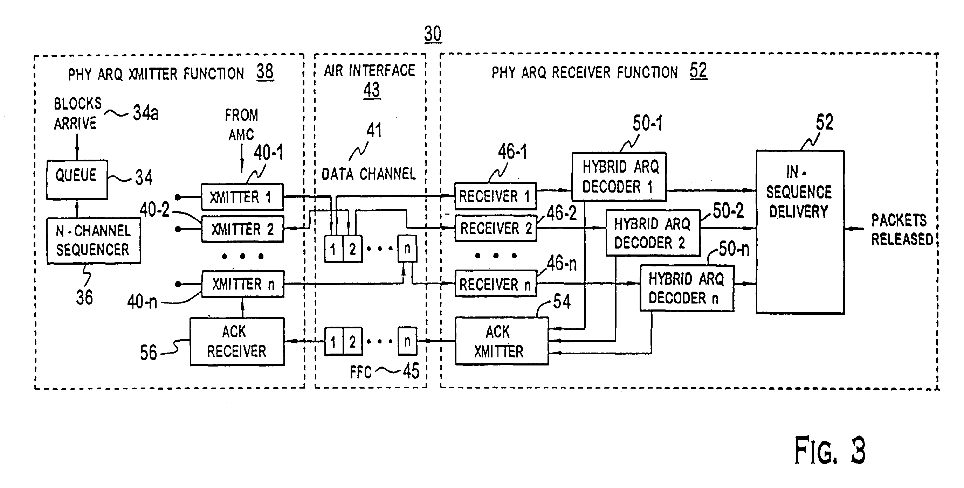

Figure 3 is an illustration of an N-channel stop and wait architecture for a PHYARQ 30. The Physical Layer ARQ transmit function 38 may be located at the base station, subscriber unit or both depending on whether downlink, uplink or both PHYARQs are used. Blocks 34a of data arrive from the network. The network blocks are placed in a queue 34 for transmission over the data channel 41 of the air interface 43. An N-channel sequencer 36 sends data of the blocks sequentially to the N transmitters 40-1 to 40-n. Each transmitter 40-1 to 40-n is associated with a transmit sequence in the data channel 41. Each transmitter 40-1 to 40-n FEC encodes and provides ECS for the block data to produce packets for AMC modulation and transmission in the data channel 41. The FEC encoded/ECS data is stored in a buffer of the transmitter 40-1 to 40-n for possible retransmission. Additionally, control information is sent from the PHYARQ transmitter 38 to synchronize reception, demodulation and decoding at the receivers 46-1 to 46-n.

Each of the N receivers 46-1 to 46-n receives the packet in its associated timeslot. The received packet is sent to a respective hybrid ARQ decoder 50-1 to 50-n (50). The hybrid ARQ decoder 50 determines the error rate, such as BER or BLER, for the received packet. If the packet has an acceptable error rate, it is released to the higher levels for further processing and an ACK is sent by the ACK transmitter 54. If the error rate is unacceptable or no packet was received, no ACK is sent or a NAK is sent. Packets with unacceptable error rates are buffered at the decoder 50 for potential combining with a retransmitted packet.

One approach for combining packets using turbo codes is as follows. If a turbo encoded packet is received with an unacceptable error rate, the packet data is retransmitted to facilitate code combining. The packet containing the same data is encoded differently. To decode the packet data, both packets are processed by the turbo decoder to recover the original data. Since the second packet has a different encoding, its soft symbols are mapped to different points in the decoding scheme. Using two packets with different encoding adds coding diversity and transmission diversity to improve the overall BER. In another approach, the identical signal is transmitted. The two received packets are combined using a maximum ratio combining of symbols. The combined signal is subsequently decoded.

The ACK for each receiver 46-1 to 46-n is sent in a fast feedback channel (FFC) 45. The fast feedback channel 45 is preferably a low latency channel. For a time division duplex system, the ACKs may be sent in idle periods between upstream and downstream transmissions. The FFC 45 is preferably a low speed, high bandwidth CDMA channel overlaying other in-band transmissions. The FFC CDMA codes and modulations are selected to minimize interference to other in-band transmissions. To increase the capacity of such a FFC 45, multiple codes may be used.

The ACK receiver 56 detects the ACKs and indicates to the corresponding transmitter 40-1 to 40-n whether the ACK was received. If the ACK was not received, the packet is retransmitted. The retransmitted packet may have a different modulation and coding scheme as directed by the AMC controller 12c, 26c. If the ACK is received, the transmitter 40-1 to 40-n clears the previous packet from the buffer and accepts a subsequent packet for transmission.

The number of transmitters and receivers N is based on various design considerations, such as the channel capacity and ACK response time. For the preferred system previously described, a 2-channel architecture is preferably utilized, with even and odd transmitters and receivers.

The PHYARQ technique of the preferred embodiment provides a 7 db gain in signal to noise ratio (SNR) as compared to a system using only higher layer ARQ. This occurs by operating at higher block error rates (BLERs) (5-20% BLER) and using smaller block sizes for layer 1 than is practical with higher layer ARQ alone. The decreased SNR requirement allows for: increased capacity by switching to high order modulation employing an adaptive modulation and coding (AMC) technique; lower customer premise equipment (CPE) costs by using lower grade RF (radio frequency) components with the PHY ARQ compensating for reduced implementation performance; increased downlink range which extends the cell radius; reduced downlink power in the base station (BS) to minimize cell-cell interference; and increased power amplifier (PA) back-off when employing a multi-carrier technique.

## Claims

1. A subscriber unit implementing physical layer automatic repeat request, comprising:
a transmitter having:
a physical layer transmitter for receiving data, formatting the received data into uplink packets, each uplink packet having a particular encoding and data modulation, transmitting the uplink packets, and
retransmitting uplink packets in response to failure to receive a corresponding acknowledgment for a given uplink packet;
an acknowledgment receiver for receiving the corresponding acknowledgment; and
an adaptive modulation and coding controller for collecting retransmission statistics by collecting the number of retransmission occurrences and
adjusting the particular data encoding and modulation using the collected statistics; and
a receiver having:
a physical layer receiver for demodulating downlink packets;
a combiner and decoder for packet combining, buffering, decoding and
detecting packet errors; and
an acknowledgment generator for generating an acknowledgment for each downlink packet if that packet has an acceptable error rate,
wherein the particular encoding and data modulation is forward error correction, hereinafter referred to as FEC,
**characterized in that**:
the uplink packets are transmitted using an orthogonal frequency division multiple access, hereinafter referred to as OFDMA, air interface and that, in addition to the FEC encoding and data modulation adjusting, selective nulling of subchannels in an OFDMA set is performed.

2. The subscriber unit of claim 1, wherein the uplink packets are transmitted using a single carrier having a frequency domain equalization, hereafter referred to as SC-FDE, air interface.

3. The subscriber unit of claim 1, whereby the subscriber unit uses a code division multiple access, hereafter referred to as CDMA, air interface and
wherein the acknowledgments are transmitted on a fast feedback channel.

4. The subscriber unit of claim 1, whereby the acknowledgment generator transmits a negative acknowledgment if any downlink packet has an unacceptable error rate.

5. The subscriber unit of claim 1, for supporting broadband wireless communications comprising:
a sequencer having a queue for receiving data blocks from a communication network and for sequentially conveying uplink packets to n transmitters;
n transmitters for transmitting uplink packets through a data channel;
n receivers for receiving return downlink packets through said data channel; and
n hybrid ARQ decoders, each coupled with one of said n receivers;
whereby said n hybrid ARQ decoders have a feedback channel for transmitting an acknowledgment when a downlink packet having an acceptable error rate has been received, and for releasing downlink packets which have an acceptable error rate.

6. The subscriber unit of claim 5, wherein said n signal transmitters each temporarily store an uplink packet that has been transmitted in a buffer memory;
whereby each of said n transmitters clear the stored packet in readiness for receipt of another block when an acknowledgement signal for the stored packet has been received at one of said n receivers.

7. The subscriber unit of claim 5, wherein said n transmitters each temporarily store an uplink packet that has been transmitted in a buffer memory; whereby said n transmitters retransmits the uplink packet temporarily stored in its buffer memory when an acknowledgement signal for the stored packet has not been received at one of said n receivers.

8. The subscriber unit of claim 5, wherein each of said n transmitters clears its buffer memory if an acknowledgement signal is not received after a maximum number of retransmissions.

9. The subscriber unit of claim 8, wherein the maximum number of retransmissions is an operator defined integer having a range from 1 to 8.

10. The subscriber unit of claim 5, wherein each of said n receivers combine a retransmitted uplink packet with an original transmitted uplink packet to facilitate error correction.

11. The subscriber unit of claim 5, wherein a transmitter failing to receive an acknowledgement signal encodes the uplink packet by employing a different encoding technique from an encoding technique employed in an original transmission of that uplink packet.

12. The subscriber unit of claim 5, wherein each of the n transmitters employs turbo coding and each of the n decoders employ code combining of an original transmission and a retransmission to facilitate error correction.

13. The subscriber unit of claim 5, wherein the uplink packets are transmitted using an orthogonal frequency division multiple access air interface in which frequency subchannels in an OFDMA set may be selectively nulled.

14. The subscriber unit of claim 5, wherein the uplink packets are transmitted using a single carrier having a frequency domain equalization air interface.

15. The subscriber unit of claim 5, wherein the acknowledgments are transmitted on a fast feedback channel using a code division multiple access air interface.

## Patentansprüche

1. Teilnehmereinheit, die einen automatische Bitübertragungsschicht-Wiederholabruf implementiert, Folgendes aufweisend:
einen Sender mit:
einem Bitübertragungsschicht-Sender zum Empfangen von Daten, Formatieren der empfangenen Daten zu Uplink-Paketen, wobei jedes Uplink-Paket eine spezielle Codierung und Datenmodulation besitzt, Übertragen der Uplink-Pakete, und Übertragungswiederholung von Uplink-Paketen im Ansprechen auf einen nicht erfolgten Empfang einer entsprechenden Empfangsbestätigung für ein bestimmtes Uplink-Paket;
einem Empfangsbestätigungsempfänger zum Empfangen der entsprechenden Empfangsbestätigung; und
einer Steuervorrichtung für adaptive Modulation und Codierung zum Erfassen statistischer Übertragungswiederholungsdaten, indem die Anzahl von Übertragungswiederholungsereignissen erfasst und die spezielle Datencodierung und -modulation unter Verwendung der erfassten statistischen Daten eingestellt wird; und
einen Empfänger mit:
einem Bitübertragungsschicht-Empfänger zum Demodulieren von Downlink-Paketen;
einem Kombinator und Decodierer zum Kombinieren, Zwischenspeichern, Decodieren von Paketen und Erfassen von Paketfehlern; und
einem Empfangsbestätigungsgenerator zum Generieren einer Empfangsbestätigung für jedes Downlink-Paket, falls das Paket eine akzeptable Fehlerrate hat,
wobei die spezielle Codierungs- und Datenmodulation eine Vorwärtsfehlerkorrektur ist, die im Nachstehenden als FEC bezeichnet wird,
**dadurch gekennzeichnet, dass**
die Uplink-Pakete unter Verwendung einer Orthogonalfrequenz-Multiplexmehrfachzugriffs-Luftschnittstelle, im Nachstehenden als ODFMA-Luftschnittstelle bezeichnet, übertragen werden, und dass zusätzlich zur FEC-Codierung und -Datenmodulation eine selektive Nullsetzung von Unterkanälen in einem OFDMA-Satz erfolgt.

2. Teilnehmereinheit nach Anspruch 1, wobei die Uplink-Pakete unter Verwendung eines Einzelträgers mit einer Frequenzbereichsentzerrungs-Luftschnittstelle, im Nachstehenden als SC-FDE-Luftschnittstelle bezeichnet, übertragen werden.

3. Teilnehmereinheit nach Anspruch 1, wobei die Teilnehmereinheit eine Codemultiplex-Vielfachzugriffs-Luftschnittstelle, im Nachstehenden als CDMA-Luftschnittstelle bezeichnet, verwendet, und wobei die Empfangsbestätigungen über einen Schnellrückkopplungskanal übertragen werden.

4. Teilnehmereinheit nach Anspruch 1, wobei der Empfangsbestätigungsgenerator eine negative Empfangsbestätigung überträgt, falls irgendein Downlink-Paket eine inakzeptable Fehlerrate hat.

5. Teilnehmereinheit nach Anspruch 1, zur Unterstützung von Breitband-Funkkommunikation , Folgendes aufweisend:
eine Ablaufsteuerung mit einer Warteschlange zum Empfangen von Datenblöcken aus einem Kommunikationsnetz, und zum sequentiellen Weiterleiten von Uplink-Paketen an n Sender;
n Sender zum Übertragen von Uplink-Paketen über einen Datenkanal;
n Empfänger zum Empfangen von Downlink-Rückpaketen über den Datenkanal; und
n Hybrid-ARQ-Decodierer, wovon jeder mit einem der n Empfänger gekoppelt ist;
wobei die n Hybrid-ARQ-Decodierer einen Rückkopplungskanal haben, um eine Empfangsbestätigung zu übertragen, wenn ein Downlink-Paket mit einer akzeptablen Fehlerrate eingegangen ist, und um Downlink-Pakete abzusetzen, die eine akzeptable Fehlerrate haben.

6. Teilnehmereinheit nach Anspruch 5, wobei die n Signalsender jeweils ein Uplink-Paket, das übertragen wurde, temporär in einem Zwischenspeicher speichern;
wobei die n Sender das gespeicherte Paket in Bereitschaft für den Empfang eines anderen Blocks jeweils löschen, wenn ein Empfangsbestätigungssignal für das gespeicherte Paket an einem der n Empfänger eingegangen ist.

7. Teilnehmereinheit nach Anspruch 5, wobei die n Sender jeweils ein Uplink-Paket, das übertragen wurde, temporär in einem Zwischenspeicher speichern;
wobei die n Sender das temporär in ihrem Zwischenspeicher gespeicherte Uplink-Paket wiederholt übertragen, wenn kein Empfangsbestätigungssignal für das gespeicherte Paket bei einem der n Empfänger eingegangen ist.

8. Teilnehmereinheit nach Anspruch 5, wobei jeder der n Sender seinen Zwischenspeicher löscht, wenn nach einer maximalen Anzahl an Übertragungswiederholungen kein Empfangsbestätigungssignal eingegangen ist.

9. Teilnehmereinheit nach Anspruch 8, wobei die maximale Anzahl an Übertragungswiederholungen eine bedienerdefinierte ganze Zahl mit einem Bereich von 1 bis 8 ist.

10. Teilnehmereinheit nach Anspruch 5, wobei die n Sender jeweils ein wiederholt übertragenes Uplink-Paket mit einem ursprünglichen, übertragenen Uplink-Paket kombinieren, um eine Fehlerkorrektur zu erleichtern.

11. Teilnehmereinheit nach Anspruch 5, wobei ein Sender, der kein Empfangsbestätigungssignal empfängt, das Uplink-Paket unter Nutzung eines Codierverfahrens codiert, das sich von einem Codierverfahren unterscheidet, das in einer ursprünglichen Übertragung dieses Pakets verwendet wurde.

12. Teilnehmereinheit nach Anspruch 5, wobei jeder der n Sender eine Turbocodierung verwendet und die n Decodierer jeweils eine Codekombinierung aus einer ursprünglichen Übertragung und einer Übertragungswiederholung verwenden, um eine Fehlerkorrektur zu erleichtern.

13. Teilnehmereinheit nach Anspruch 5, wobei die Uplink-Pakete unter Verwendung einer Orthogonalfrequenz-Multiplexmehrfachzugriffs-Luftschnittstelle übertragen werden, wobei Frequenzunterkanäle in einem OFDMA-Satz selektiv auf Null gesetzt werden können.

14. Teilnehmereinheit nach Anspruch 5, wobei die Uplink-Pakete unter Verwendung eines Einzelträgers mit einer Frequenzbereichsentzerrungs-Luftschnittstelle übertragen werden.

15. Teilnehmereinheit nach Anspruch 5, wobei die Empfangsbestätigungen über einen Schnellrückkopplungskanal unter Verwendung einer Codemultiplex-Vielfachzugriffs-Luftschnittstelle übertragen werden.

## Revendications

1. Unité d'abonné mettant en oeuvre une demande de répétition automatique de couche physique, comportant :
un émetteur présentant :
un émetteur de couche physique pour recevoir des données, formater les données reçues en paquets montants, chaque paquet montant ayant un codage particulier et une modulation de données particulière, émettre les paquets montants, et réémettre les paquets montants en cas de non-réception d'un accusé de réception correspondant à un paquet montant donné ;
un récepteur d'accusé de réception pour recevoir l'accusé de réception correspondant ; et
un contrôleur de modulation et de codage adaptatif pour collecter des statistiques de réémission en collectant le nombre d'événements de réémission et en réglant le codage particulier et la modulation particulière de données à l'aide des statistiques collectées ; et
un récepteur présentant :
un récepteur de couche physique pour démoduler des paquets descendants ; un combineur et décodeur pour combiner, mettre en mémoire tampon et
décoder des paquets et détecter des erreurs de paquet ; et
un générateur d'accusé de réception pour générer un accusé de réception pour chaque paquet descendant si celui-ci présente un taux d'erreur admissible,
le codage particulier et la modulation particulière de données étant à correction d'erreurs sans voie de retour, ci-après désignée FEC,
**caractérisée en ce que :**
les paquets montants sont émis via une interface hertzienne à accès multiple par répartition orthogonale en fréquence, ci-après désigné AMROF, et **en ce que**, en plus du réglage du codage FEC et de la modulation de données, une mise à zéro sélective de sous-canaux dans un ensemble AMROF est réalisée.

2. L'unité d'abonné selon la revendication 1, où les paquets montants sont émis via une monoporteuse à interface hertzienne à égalisation du domaine fréquentiel, ci-après désignée SC-FDE.

3. L'unité d'abonné selon la revendication 1, où l'unité d'abonné utilise une interface hertzienne à accès multiple par répartition en code, ci-après désigné AMRC, et où les accusés de réception sont émis sur un canal de rétroaction rapide.

4. L'unité d'abonné selon la revendication 1, où le générateur d'accusé de réception émet un accusé de réception négatif si un quelconque paquet descendant présente un taux d'erreur inadmissible.

5. L'unité d'abonné selon la revendication 1, admettant une communication sans fil à large bande comportant :
un séquenceur présentant une file d'attente pour recevoir des blocs de données depuis un réseau de communication et pour acheminer séquentiellement des paquets montants à n émetteurs ;
n émetteurs pour émettre des paquets montants via un canal de données ;
n récepteurs pour recevoir des paquets descendants en retour via ledit canal de données ; et
n décodeurs ARQ hybrides, chacun étant couplé à l'un desdits n récepteurs ; lesdits n décodeurs ARQ hybrides présentant un canal de rétroaction pour émettre un accusé de réception lorsqu'un paquet descendant présentant un taux d'erreur admissible a été reçu, et pour libérer des paquets descendants qui présentent un taux d'erreur admissible.

6. L'unité d'abonné selon la revendication 5, où lesdits n émetteurs de signal stockent chacun temporairement un paquet montant qui a été émis dans une mémoire tampon ;
chacun desdits n émetteurs effaçant le paquet stocké en vue de recevoir un autre bloc lorsqu'un signal d'accusé de réception pour le paquet stocké a été reçu par l'un desdits n récepteurs.

7. L'unité d'abonné selon la revendication 5, où lesdits n émetteurs stockent chacun temporairement un paquet montant qui a été émis dans une mémoire tampon ;
lesdits n émetteurs réémettant le paquet montant temporairement stocké dans sa mémoire tampon lorsqu'un signal d'accusé de réception pour le paquet
stocké n'a pas été reçu par l'un desdits n récepteurs.

8. L'unité d'abonné selon la revendication 5, où chacun desdits n émetteurs
efface sa mémoire tampon si un signal d'accusé de réception n'est pas reçu après un nombre maximum de réémissions.

9. L'unité d'abonné selon la revendication 8, où le nombre maximum de réémissions est un entier défini par un opérateur, compris dans une plage de 1 à 8.

10. L'unité d'abonné selon la revendication 5, où chacun desdits n récepteurs combine un paquet montant réémis avec un paquet montant émis original pour faciliter la correction d'erreurs.

11. L'unité d'abonné selon la revendication 5, où un émetteur ne recevant pas un signal d'accusé de réception code le paquet montant en utilisant une technique de codage différente d'une technique de codage utilisée dans une émission originale de ce paquet montant.

12. L'unité d'abonné selon la revendication 5, où chacun des n émetteurs utilise un codage turbo et chacun des n décodeurs utilise une combinaison de codes d'une émission originale et d'une réémission pour faciliter la correction d'erreurs.

13. L'unité d'abonné selon la revendication 5, où les paquets montants sont émis via une interface hertzienne à accès multiple par répartition orthogonale en fréquence, dans laquelle des sous-canaux de fréquence dans un ensemble AMROF peuvent être mis à zéro sélectivement.

14. L'unité d'abonné selon la revendication 5, où les paquets montants sont émis via une monoporteuse à interface hertzienne à égalisation du domaine fréquentiel.

15. L'unité d'abonné selon la revendication 5, où les accusés de réception sont émis sur un canal de rétroaction rapide via une interface hertzienne à accès multiple par répartition en code.
